# EUROPEAN PATENT APPLICATION

(11) **EP 4 378 771 A1**
(43) Date of publication of application: **05.06.2024**
(21) Application number: 21953102.7
(22) Date of filing: 11.08.2021
(51) Int. Cl.: B60T 13/66, B60T 13/74, B60T 7/04, B60T 8/36

(54) **HYDRAULIC BRAKE DEVICE, TRAVEL SENSOR, AND VEHICLE**

(71) Applicant: Huawei Technologies Co., Ltd., Shenzhen, Guangdong 518129 (CN)
(72) Inventor: ZHANG, Xin, Shenzhen, Guangdong 518129 (CN); LU, Yuhao, Shenzhen, Guangdong 518129 (CN); ZHANG, Yongsheng, Shenzhen, Guangdong 518129 (CN)
(74) Representative: Epping - Hermann - Fischer
(86) International application number: PCT/CN2021/111971
(87) International publication number: WO 2023/015472

(57) **Abstract**

A hydraulic braking apparatus, a travel sensor, and a vehicle are provided. The hydraulic braking apparatus includes: a hydraulic valve block (100); a master cylinder housing (200), disposed on one side of the hydraulic valve block (100), where a master cylinder part (210) is disposed inside the master cylinder housing (200), and the master cylinder part (210) includes a piston (211), a push rod (212), and a magnet component (213); a control module (300), disposed on another side of the hydraulic valve block (100), where the control module (300) includes a control substrate (310) and a connector (320) electrically connected to the control substrate (310); and a travel sensor (400), fastened to the inside of the hydraulic valve block (100), and configured to detect movement of the magnet component (213) to determine a movement amount of the piston (211), where the travel sensor (400) is connected to the connector (320) through a through hole in the hydraulic valve block (100). According to the hydraulic braking apparatus, positioning precision of the travel sensor (400) in the hydraulic valve block (100) can be improved.

## Description

### TECHNICAL FIELD

This application relates to the field of vehicles, and more specifically, to a hydraulic braking apparatus, a travel sensor, and a vehicle.

### BACKGROUND

A brake system of a vehicle is a system that applies specific brake force to wheels of the vehicle, to brake the wheels forcibly to some extent. The brake system enables a running vehicle to forcibly decelerate or even stop as required by a driver or a controller, enables a stopped vehicle to park stably under various road conditions (for example, on a ramp), or enables a vehicle driven downhill to maintain a stable speed.

As a popular brake system, an electro-hydraulic brake (electro-hydraulic brake, EHB) system usually includes a hydraulic braking apparatus. For a hydraulic braking apparatus in which a master cylinder housing is separated from a hydraulic valve block, a travel sensor is usually disposed outside the master cylinder housing, and is electrically connected to a control module through a through hole in the hydraulic valve block. However, because a distance between the master cylinder housing and the control module is long, it is difficult to ensure positioning precision of the travel sensor. This increases difficulty in electrical connection between the travel sensor and the control module.

Therefore, how to improve the positioning precision of the travel sensor becomes an urgent problem to be resolved.

### SUMMARY

This application provides a hydraulic braking apparatus, a travel sensor, and a vehicle, to improve positioning precision of the travel sensor.

According to a first aspect, a hydraulic braking apparatus is provided. The hydraulic braking apparatus includes: a hydraulic valve block 100, where a through hole is provided in the hydraulic valve block 100; a master cylinder housing 200, disposed on one side of the hydraulic valve block 100, where a master cylinder part 210 is disposed inside the master cylinder housing 200, the master cylinder part 210 includes a piston 211, a push rod 212, and a magnet component 213, the piston 211 is connected to the push rod 212, and the magnet component 213 moves with the piston 211; a control module 300, disposed on another side of the hydraulic valve block 100, where the control module 300 includes a control substrate 310 and a connector 320 electrically connected to the control substrate 310; and a travel sensor 400, fastened to the inside of the hydraulic valve block 100, and configured to detect movement of the magnet component 213 to determine a movement amount of the piston 211, where the travel sensor 400 is connected to the connector 320 through the through hole in the hydraulic valve block 100.

According to the solution in this embodiment of this application, for a hydraulic braking apparatus in which a master cylinder housing is separated from a hydraulic valve block, a travel sensor is fastened to the inside of the hydraulic valve block, so that positioning precision of the travel sensor in the hydraulic valve block can be ensured, and interconnection precision between the travel sensor and a control module can be further improved. That is, this helps implement interconnection between the travel sensor and the control module. In addition, according to the solution in this embodiment of this application, concentricity of hole-shaft fit between the travel sensor and the hydraulic valve block can be ensured, thereby helping prevent the travel sensor from bearing assembly stress.

The control module 300, the hydraulic valve block 100, and the master cylinder housing 200 form a three-layer structure.

That the magnet component 213 moves with the piston 211 may be understood as the following: The magnet component 213 and the piston 211 are relatively fastened.

For example, the magnet component 213 may be disposed inside the piston 211 and move with the piston 211.

Alternatively, the magnet component 213 may be separated from the piston 211, provided that relative positions of the magnet component 213 and the piston 211 are unchanged.

That the travel sensor 400 is fastened to the inside of the hydraulic valve block 100 means that a fastening component of the travel sensor 400 is located inside the hydraulic valve block 100, instead of constituting a limitation that the travel sensor 400 is entirely located inside the hydraulic valve block 100.

With reference to the first aspect, in some implementations of the first aspect, the travel sensor 400 includes: a travel sensor housing 410, and a fastening component 420, a first positioning component 431, and a second positioning component 432 that are disposed on the travel sensor housing 410. The fastening component 420, the first positioning component 431, and the second positioning component 432 are configured to fasten the travel sensor housing 410 to the inside of the hydraulic valve block 100.

The travel sensor 400 is fastened to the inside of the hydraulic valve block 100 by using one fastening component and two positioning components.

It should be understood that the travel sensor 400 may further include more than one fastening component. Alternatively, the travel sensor 400 may further include more than two positioning components. This is not limited in this embodiment of this application.

It should be understood that the fastening component and the positioning component may be the same, or may be different. In other words, if the fastening component can be used to implement positioning, the fastening component may alternatively be used as a positioning component.

According to the solution in this embodiment of this application, positioning precision of the travel sensor in the hydraulic valve block can be further improved by using one fastening component and two positioning components.

In addition, in the solution of this embodiment of this application, the travel sensor can be fastened by using at least one fastening end. For example, the travel sensor can be fastened by using one screw. This reduces processing costs and processing working hours.

With reference to the first aspect, in some implementations of the first aspect, the fastening component 420, the first positioning component 431, or the second positioning component 432 meets at least one of the following: A distance between the first positioning component 431 and the second positioning component 432 is less than or equal to a second target threshold, a distance between the first positioning component 431 and the fastening component 420 is less than or equal to a third target threshold, or a distance between the second positioning component 432 and the fastening component 420 is less than or equal to a fourth target threshold.

According to the solution in this embodiment of this application, a distance between the fastening component and the positioning component is set to be short. This may enhance close cooperation between the hydraulic valve block and the travel sensor, improve positioning accuracy, and help implement precise fastening of the travel sensor and the hydraulic valve block.

With reference to the first aspect, in some implementations of the first aspect, the first positioning component 431 includes a first sealing ring 431, where the first sealing ring 431 is located between the travel sensor housing 410 and the through hole in the hydraulic valve block 100.

The first sealing ring 431 may be further configured to prevent liquid leakage.

According to the solution in this embodiment of this application, positioning precision of the travel sensor is improved. For example, a central shaft of the first sealing ring is used as a primary positioning reference, and a positioning pin is used as a secondary positioning reference, so that concentricity of hole-shaft fit between the travel sensor and the hydraulic valve block is ensured. In this way, the first sealing ring can be in a free assembly state, thereby improving sealing effect, reducing a liquid leakage risk, helping prevent liquid from entering the control module, and improving reliability of the braking apparatus.

With reference to the first aspect, in some implementations of the first aspect, the travel sensor 400 further includes a connection terminal 460 disposed on the travel sensor housing 410, where the connection terminal 460 is connected to the connector 320. A distance between the first positioning component 431 and the connection terminal 460 is less than or equal to a first target threshold.

For example, the connection terminal 460 may be a metal socket, a spring, or a metal contact.

According to the solution in this embodiment of this application, a distance between the first positioning component 431 and the connection terminal 460 is set to be short, and positioning precision of the travel sensor near the connection terminal is high. This can further improve interconnection precision between the travel sensor and the control module, that is, helps implement interconnection between the travel sensor and the control module.

With reference to the first aspect, in some implementations of the first aspect, the second positioning component 432 includes a positioning pin 432.

Correspondingly, a positioning hole fitting with the positioning pin 432 is provided inside the hydraulic valve block 100.

The travel sensor 400 may constrain a position of the travel sensor 400 by using the positioning pin 432.

With reference to the first aspect, in some implementations of the first aspect, the travel sensor 400 further includes a sensing element 440 disposed inside the travel sensor housing 410, where the sensing element 440 is mounted inside the master cylinder housing 200.

In this embodiment of this application, the travel sensor is disposed inside the hydraulic valve block and the master cylinder housing, and is protected by the hydraulic valve block and the master cylinder housing. The hydraulic valve block and the master cylinder housing are usually metal parts. This can prevent the travel sensor from being hit by an external object.

With reference to the first aspect, in some implementations of the first aspect, the travel sensor 400 further includes a sensing substrate 450 disposed inside the travel sensor housing 410, the sensing element 440 is fastened to the sensing substrate 450, the sensing substrate 450 is electrically connected to the sensing element 440, and the sensing substrate 450 is electrically connected to the connection terminal 460.

The sensing element 440 may transmit an output electrical signal to the control module 300 by using the connection terminal 460.

For example, the sensing substrate 450 is fastened to the inside of the travel sensor housing 410. The sensing element 440 may be fastened to the sensing substrate 450 through tin soldering, and is electrically connected to the sensing substrate 450.

With reference to the first aspect, in some implementations of the first aspect, the travel sensor housing 410 is filled with a potting material, and the sensing substrate 450 and the sensing element 440 are covered with the potting material.

That the travel sensor housing 410 is filled with a potting material may be the following: A local area inside the travel sensor housing 410 is filled with the potting material, or a whole area inside the travel sensor housing 410 is filled with the potting material.

For example, the potting material may be a resin material.

In this embodiment of this application, a cured potting material may have a waterproof and dustproof capability, a wear resistance capability, and a pressure resistance capability. In this way, a covered sensing element can be protected.

With reference to the first aspect, in some implementations of the first aspect, the sensing substrate 450 is perpendicular to the control substrate 310.

An electrical connection between the sensing substrate 450 and the control module may be a Z-shaped connection or a straight-line connection. In other words, a central shaft of the sensing substrate 450 is parallel to a central shaft of the sensor housing 410, or a central shaft of the sensing substrate 450 is coaxial with a central shaft of the sensor housing 410.

According to the solution in this embodiment of this application, the central shaft of the sensing substrate is parallel to or coaxial with the primary positioning reference, so that an assembly tolerance can be further reduced, and further, assembly stress on the travel sensor 400 is reduced. With reference to the first aspect, in some implementations of the first aspect, a second sealing ring 500 disposed between the hydraulic valve block 100 and the master cylinder housing 200 is further included.

Specifically, the second sealing ring 500 is disposed at a joint between the master cylinder housing and a cavity that accommodates the travel sensor 400 and that is in the hydraulic valve block 100. According to the solution in this embodiment of this application, the second sealing ring is disposed between the hydraulic valve block and the master cylinder housing, so that local sealing of the travel sensor can be implemented, and liquid leaked between the hydraulic valve block and the master cylinder housing is prevented from entering the control module. That is, the leaked liquid is prevented from entering the control module through the cavity of the hydraulic valve block and the through hole in the hydraulic valve block, thereby improving reliability of the braking apparatus.

According to a second aspect, a travel sensor is provided, applied to a hydraulic braking apparatus. The hydraulic braking apparatus includes: a hydraulic valve block 100, where a through hole is provided in the hydraulic valve block 100; a master cylinder housing 200, disposed on one side of the hydraulic valve block 100, where a master cylinder part 210 is disposed inside the master cylinder housing 200, the master cylinder part 210 includes a piston 211, a push rod 212, and a magnet component 213, the piston 211 is connected to the push rod 212, and the magnet component 213 moves with the piston 211; a control module 300, disposed on another side of the hydraulic valve block 100; and a travel sensor 400, where the travel sensor 400 is connected to the control module 300 through the through hole in the hydraulic valve block 100. The travel sensor includes: a travel sensor housing 410, and a fastening component 420, a first positioning component 431, and a second positioning component 432 that are disposed on the travel sensor housing 410. The fastening component 420, the first positioning component 431, and the second positioning component 432 are configured to fasten the travel sensor housing 410 to the inside of the hydraulic valve block 100 in the hydraulic braking apparatus.

According to the solution in this embodiment of this application, for a hydraulic braking apparatus in which a master cylinder housing is separated from a hydraulic valve block, a travel sensor is fastened to the inside of the hydraulic valve block, so that positioning precision of the travel sensor in the hydraulic valve block can be ensured, and interconnection precision between the travel sensor and a control module can be further improved. That is, this helps implement interconnection between the travel sensor and the control module. In addition, according to the solution in this embodiment of this application, concentricity of hole-shaft fit between the travel sensor and the hydraulic valve block can be ensured, thereby helping prevent the travel sensor from bearing assembly stress.

In addition, positioning precision of the travel sensor in the hydraulic valve block can be further improved by using one fastening component and two positioning components.

In addition, in the solution of this embodiment of this application, the travel sensor can be fastened by using at least one fastening end. For example, the travel sensor can be fastened by using one screw. This reduces processing costs and processing working hours.

With reference to the second aspect, in some implementations of the second aspect, the first positioning component 431 includes a first sealing ring 431, where the first sealing ring 431 is located between the travel sensor housing 410 and the through hole in the hydraulic valve block 100.

With reference to the second aspect, in some implementations of the second aspect, a connection terminal 460 disposed on the travel sensor housing 410 is further included, where the connection terminal 460 is connected to the control module 300 in the hydraulic bake apparatus. A distance between the first positioning component 431 and the connection terminal 460 is less than or equal to a first target threshold.

With reference to the second aspect, in some implementations of the second aspect, the second positioning component 432 includes a positioning pin 432.

With reference to the second aspect, in some implementations of the second aspect, a sensing element 440 disposed inside the travel sensor housing 410 is further included, where the sensing element 440 is mounted inside the master cylinder housing 200 in the hydraulic braking apparatus. With reference to the second aspect, in some implementations of the second aspect, a sensing substrate 450 disposed inside the travel sensor housing 410 is further included, where the sensing element 440 is fastened to the sensing substrate 450, the sensing substrate 450 is electrically connected to the sensing element 440, and the sensing substrate 450 is electrically connected to the connection terminal 460.

With reference to the second aspect, in some implementations of the second aspect, the travel sensor housing 410 is filled with a potting material, and the sensing substrate 450 and the sensing element 440 are covered with the potting material.

With reference to the second aspect, in some implementations of the second aspect, the sensing substrate 450 is perpendicular to the control substrate 310 in the control module 300.

It should be understood that extensions, definitions, explanations, and descriptions of related content in the first aspect are also applicable to same content in the second aspect.

According to a third aspect, an electro-hydraulic brake-by-wire system is provided, including the hydraulic braking apparatus according to any one of the first aspect or the possible implementations of the first aspect.

According to a fourth aspect, a vehicle is provided, including the hydraulic braking apparatus according to any one of the first aspect or the possible implementations of the first aspect.

### BRIEF DESCRIPTION OF DRAWINGS

FIG. 1 is a schematic diagram of a structure of a hydraulic braking apparatus according to an embodiment of this application;
FIG. 2 is a schematic diagram of a structure of a travel sensor according to an embodiment of this application; and
FIG. 3 is a schematic cross-sectional view of a hydraulic braking apparatus according to an embodiment of this application.

### DESCRIPTION OF EMBODIMENTS

The following describes technical solutions of this application with reference to accompanying drawings.

For a hydraulic braking apparatus in which a master cylinder housing is separated from a hydraulic valve block, a sensing element of a travel sensor is disposed outside the master cylinder housing, and is electrically connected to a control module through a through hole in the hydraulic valve block. Liquid leakage between the travel sensor and the hydraulic valve block is avoided by using a sealing ring. Due to problems such as a design size and an assembly tolerance, it is difficult to guarantee positioning precision of the travel sensor in the hydraulic valve block. This further leads to a series of problems. For example, the positioning precision of the travel sensor in the hydraulic valve block affects interconnection precision between the travel sensor and the control module. If the positioning precision of the travel sensor in the hydraulic valve block is poor, interconnection between the travel sensor and the control module is increasingly difficult, and an electrical connection between the travel sensor and the control module is affected. For another example, the positioning precision of the travel sensor in the hydraulic valve block affects a degree of hole-shaft fit between the travel sensor and the hydraulic valve block. If the positioning precision of the travel sensor in the hydraulic valve block is poor, reasonable hole-shaft concentricity cannot be ensured, and consequently, the travel sensor always bears assembly stress.

An embodiment of this application provides a hydraulic braking apparatus. In the hydraulic braking apparatus, a travel sensor is fastened to the inside of a hydraulic valve block, thereby ensuring positioning precision of the travel sensor in the hydraulic valve block.

The following describes solutions in embodiments of this application with reference to the accompanying drawings.

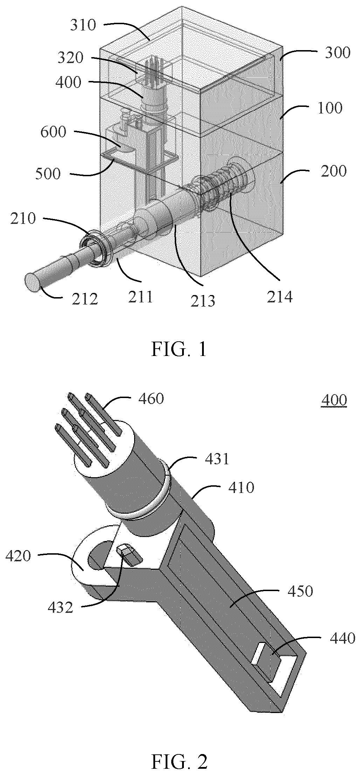

FIG. 1 is a schematic diagram of a three-dimensional structure of a hydraulic braking apparatus according to an embodiment of this application. The hydraulic braking apparatus shown in FIG. 1 includes a hydraulic valve block 100, a master cylinder housing 200, a control module 300, and a travel sensor 400.

A through hole is provided in the hydraulic valve block 100.

In this embodiment of this application, the hydraulic valve block 100 may also be referred to as a hydraulic block, a valve block, a hydraulic valve, or the like.

The master cylinder housing 200 is disposed on one side of the hydraulic valve block 100.

In other words, the master cylinder housing 200 is separated from the hydraulic valve block 100. A master cylinder part 210 is disposed inside the master cylinder housing 200, and the master cylinder part 210 includes a piston 211, a push rod 212, and a magnet component 213. The piston 211 is connected to the push rod 212, and the magnet component 213 moves with the piston 211. As shown in FIG. 1, the master cylinder part 210 protrudes from the master cylinder housing 200. That the magnet component 213 moves with the piston 211 may be understood as the following: The magnet component 213 and the piston 211 are relatively fastened.

For example, the magnet component 213 may be disposed inside the piston 211 and move with the piston 211.

Alternatively, the magnet component 213 may be separated from the piston 211, provided that relative positions of the magnet component 213 and the piston 211 are unchanged.

The control module 300 is disposed on another side of the hydraulic valve block 100.

In other words, the control module 300, the hydraulic valve block 100, and the master cylinder housing 200 form a three-layer structure.

The control module 300 includes a control substrate 310 and a connector 320 electrically connected to the control substrate 310.

For example, the control module 300 may include an electronic control unit (electronic control unit, ECU).

The travel sensor 400 is fastened to the inside of the hydraulic valve block 100, and is configured to detect movement of the magnet component 213 to determine a movement amount of the piston 211. The travel sensor 400 is connected to the connector 320 through the through hole in the hydraulic valve block 100.

Specifically, the travel sensor 400 is fastened in a cavity inside the hydraulic valve block 100. The magnet component 213 moves with the piston 211, so that a magnetic field of the travel sensor 400 changes. The travel sensor senses the change and outputs an electrical signal.

It should be noted that, that the travel sensor 400 is fastened to the inside of the hydraulic valve block 100 means that a fastening component of the travel sensor 400 is located inside the hydraulic valve block 100, instead of constituting a limitation that the travel sensor 400 is entirely located inside the hydraulic valve block 100.

According to the solution in this embodiment of this application, for a hydraulic braking apparatus in which a master cylinder housing is separated from a hydraulic valve block, a travel sensor is fastened to the inside of the hydraulic valve block, so that positioning precision of the travel sensor in the hydraulic valve block can be ensured, and interconnection precision between the travel sensor and a control module can be further improved. That is, this helps implement interconnection between the travel sensor and the control module. In addition, according to the solution in this embodiment of this application, concentricity of hole-shaft fit between the travel sensor and the hydraulic valve block can be ensured, thereby helping prevent the travel sensor from bearing assembly stress.

For example, the magnet component 213 may include a permanent magnet and a housing. That is, the travel sensor 400 may detect movement of the permanent magnet, to determine the movement amount of the piston 211.

Further, as shown in FIG. 1, the master cylinder part 210 may further include a spring 214. The magnet component 213 closely cooperates with the spring 214 and the piston 211. A travel limiting feature is set on the piston 211. Under action of push rod force and spring force, the piston 211 can move back and forth in the master cylinder housing.

It should be noted that the components in the master cylinder part and position relationships between the components in embodiments of this application are merely examples. In actual application, the master cylinder part 210 may include more or fewer components, and the position relationships between the components may alternatively be set based on a requirement. A master cylinder part of another type in the conventional technology may also be applied to the solution in embodiments of this application. A specific structure of the master cylinder part is not limited in embodiments of this application.

Optionally, a second sealing ring 500 is disposed between the hydraulic valve block 100 and the master cylinder housing 200.

Specifically, the second sealing ring 500 is disposed at a joint between the master cylinder housing and a cavity that accommodates the travel sensor 400 in the hydraulic valve block 100.

The second sealing ring is disposed between the hydraulic valve block 100 and the master cylinder housing 200, so that local sealing of the travel sensor can be implemented, and liquid leaked between the hydraulic valve block and the master cylinder housing is prevented from entering the control module. That is, the leaked liquid is prevented from entering the control module through the cavity of the hydraulic valve block and the through hole in the hydraulic valve block, thereby improving reliability of the braking apparatus.

It should be noted that integral seal exists between the control module and the hydraulic valve block, so that all electronic components inside the control module can be protected.

FIG. 2 is a schematic diagram of a travel sensor according to an embodiment of this application. It should be understood that FIG. 2 shows merely an example of the travel sensor in this embodiment of this application, and constitutes no limitation on a structure of the travel sensor in this embodiment of this application.

As shown in FIG. 2, the travel sensor 400 includes a travel sensor housing 410, and a fastening component 420, a first positioning component 431, and a second positioning component 432 that are disposed on the travel sensor housing 410. The fastening component 420, the first positioning component 431, and the second positioning component 432 are configured to fasten the travel sensor housing 410 to the inside of the hydraulic valve block 100.

In other words, the travel sensor 400 is fastened to the inside of the hydraulic valve block 100 by using one fastening component and two positioning components.

It should be understood that the travel sensor 400 may further include more than one fastening component. Alternatively, the travel sensor 400 may further include more than two positioning components. This is not limited in this embodiment of this application.

It should be understood that the fastening component and the positioning component may be the same, or may be different. In other words, if the fastening component can be used to implement positioning, the fastening component may also be used as a positioning component.

For example, the fastening component 420 may be fastened in a screw fastening manner. For example, as shown in FIG. 1 or FIG. 2, the fastening component 420 may include a threaded hole. Correspondingly, a threaded hole fitting with the threaded hole in the fastening component 420 is provided in the hydraulic valve block 100. The threaded hole in the fastening component 420 and the threaded hole in the hydraulic valve block 100 are fastened by using a screw 600. In other words, the travel sensor 400 may be fastened to the inside of the hydraulic valve block 100 by using a screw. It should be understood that FIG. 1 and FIG. 2 merely use the screw fastening manner as an example, and constitute no limitation on a fastening manner in embodiments of this application.

Alternatively, the fastening component 420 may be fastened in an interference fastening manner. For example, the fastening component 420 may include a positioning hole, and a positioning shaft fitting with the positioning hole is disposed inside the hydraulic valve block 100. The positioning hole and the positioning shaft are fastened to each other in an interference fastening manner. In other words, the travel sensor 400 may be fastened to the inside of the hydraulic valve block 100 in an interference fastening manner. In this case, the fastening component 420 can be configured to implement positioning of the travel sensor 400, that is, the fastening component 420 may alternatively be used as a positioning component.

Alternatively, the fastening component 420 may be fastened in a self-clinching fastening manner. In other words, the travel sensor 400 may be fastened to the inside of the hydraulic valve block 100 in a self-clinching fastening manner.

Optionally, the second positioning component 432 may include a positioning pin 432. Correspondingly, a positioning hole fitting with the positioning pin 432 is provided inside the hydraulic valve block 100. In this way, the travel sensor 400 can constrain a position of the travel sensor 400 by using the positioning pin 432.

Optionally, the first positioning component 431 includes an area that is on the travel sensor housing 410 and that is in interference fit with the through hole in the hydraulic valve block 100. In other words, the travel sensor housing 410 and the through hole in the hydraulic valve block 100 are in interference fit. A positioning manner of the first positioning component 431 may be interference fitting positioning.

Optionally, the first positioning component 431 includes a first sealing ring 431 disposed on the travel sensor housing 410. The first sealing ring 431 is located between the travel sensor housing 410 and the through hole in the hydraulic valve block 100.

The first sealing ring 431 may be further configured to prevent liquid leakage.

It should be understood that the first sealing ring 431 is optional.

For example, when the second sealing ring 500 exists, the first sealing ring 431 may not be disposed.

Alternatively, when the first sealing ring 431 exists, the second sealing ring 500 may not be disposed.

For example, when the first sealing ring 431 exists and the travel sensor 400 has a dustproof and waterproof capability, the second sealing ring 500 may not be disposed between the hydraulic valve block 100 and the master cylinder housing 200.

Further, a distance between the first positioning component 431 and the second positioning component 432 may be less than or equal to a second target threshold.

For example, a distance between the first sealing ring 431 and the positioning pin 432 may be less than or equal to 2 cm.

Further, a distance between the first positioning component 431 and the fastening component 420 may be less than or equal to a third target threshold.

Alternatively, a distance between the second positioning component 432 and the fastening component 420 may be less than or equal to a fourth target threshold.

In this way, close cooperation between the hydraulic valve block and the travel sensor can be strengthened, and positioning accuracy can be improved.

In this way, positioning precision of the travel sensor in the hydraulic valve block can be further improved by using one fastening component and two positioning components. The fixing component and the positioning component are usually close to each other in position. This helps implement precise fastening of the travel sensor and the hydraulic valve block.

In addition, in the solution of this embodiment of this application, the travel sensor can be fastened by using at least one fastening end. For example, the travel sensor can be fastened by using one screw. This reduces processing costs and processing working hours.

In addition, according to the solution in this embodiment of this application, positioning precision of the travel sensor is improved. For example, a central shaft of the first sealing ring is used as a primary positioning reference, and a positioning pin is used as a secondary positioning reference, so that concentricity of hole-shaft fit between the travel sensor and the hydraulic valve block is ensured. In this way, the first sealing ring can be in a free assembly state, thereby improving sealing effect, reducing a liquid leakage risk, helping prevent liquid from entering the control module, and improving reliability of the braking apparatus.

Optionally, the travel sensor 400 further includes a connection terminal 460 disposed on the travel sensor housing 410. The connection terminal 460 is connected to the connector 320 of the control module 300. A distance between the first positioning component 431 and the connection terminal 460 is less than or equal to a first target threshold.

For example, a distance between the first sealing ring 431 and the connection terminal 460 is less than or equal to the first target threshold.

In this way, positioning precision of the travel sensor near the connection terminal is high. This can further improve interconnection precision between the travel sensor and the control module, that is, helps implement interconnection between the travel sensor and the control module.

For example, the connection terminal 460 and the travel sensor housing 410 may be connected to each other in an injection molding manner, or in a mechanical fastening manner.

For example, as shown in FIG. 1 or FIG. 2, the connection terminal 460 may be a metal socket.

That is, the connection terminal 460 and the connector 320 are electrically connected to each other in a metal connector manner. It should be understood that the connection terminal 460 in FIG. 1 or FIG. 2 is merely an example, and constitutes no limitation on embodiments of this application. Alternatively, the connection terminal 460 may be a spring. That is, the connection terminal 460 and the connector 320 are electrically connected to each other through spring contact.

Alternatively, the connection terminal 460 may be a metal contact. That is, the connection terminal 460 and the connector 320 are electrically connected to each other through the metal contact.

It should be understood that the connection terminal 460 may alternatively be in another form. This is not limited in embodiments of this application, provided that the connection terminal 460 and the connector 320 can be electrically connected to each other.

Optionally, the travel sensor 400 further includes a sensing element 440 disposed inside the travel sensor housing 410. The sensing element 440 is mounted inside the master cylinder housing 200. Optionally, the travel sensor 400 further includes a sensing substrate 450 disposed inside the travel sensor housing 410, and the sensing element 440 is fastened to the sensing substrate 450. The sensing substrate 450 is electrically connected to the sensing element 440, and the sensing substrate 450 is electrically connected to the connection terminal 460.

The sensing element 440 may transmit an output electrical signal to the control module 300 by using the connection terminal 460.

For example, as shown in FIG. 2, the sensing substrate 450 is fastened to the inside of the travel sensor housing 410. The sensing element 440 may be fastened to the sensing substrate 450 through tin soldering, and is electrically connected to the sensing substrate 450.

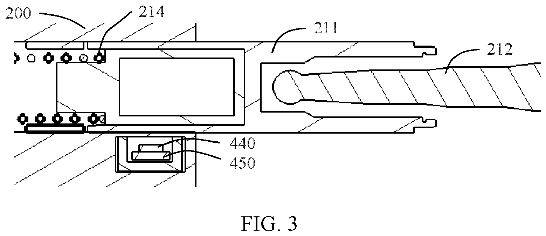

FIG. 3 shows a schematic local cross-sectional diagram of a hydraulic braking apparatus. It should be understood that FIG. 3 may be used as a schematic local cross-sectional diagram of the hydraulic braking apparatus shown in FIG. 1.

The sensing element 440 is disposed inside the master cylinder housing 200, and is close to the magnet component 213. The sensing element 440 may detect movement of the magnet component, to determine a movement amount of the piston. Specifically, when the magnet component 213 moves, a magnetic field at the sensing element 440 changes. The sensing element 440 may determine the movement amount of the piston based on a change status of the magnetic field, and output a corresponding electrical signal. The sensing element 440 may be disposed near the magnet component 213, so that a distance, namely, an air gap, between the sensing element 440 and the magnet component 213 is as small as possible, and signal precision of the travel sensor 400 can be further improved.

In this embodiment of this application, the travel sensor is disposed inside the hydraulic valve block and the master cylinder housing, and is protected by the hydraulic valve block and the master cylinder housing. The hydraulic valve block and the master cylinder housing are usually metal parts. This can prevent the travel sensor from being hit by an external object.

Optionally, the travel sensor 400 may be a Hall effect sensor, or may be another sensor. In other words, the sensing element 440 may be a Hall element, or may be a sensing element of another type. This is not limited in this application.

As shown in FIG. 2, when the sensing substrate 450 is fastened to the inside of the travel sensor housing 410, the sensing substrate and the sensing element may be sealed, that is, local sealing of the travel sensor is implemented, to protect the sensing element.

Optionally, the travel sensor housing 410 is filled with a potting material, and the sensing substrate 450 and the sensing element 440 are covered with the potting material.

For example, a cured potting material may have a waterproof and dustproof capability, a wear resistance capability, and a pressure resistance capability. In this way, a covered sensing element can be protected. For example, the potting material may be a resin material.

That the travel sensor housing 410 is filled with a potting material may be the following: A local area inside the travel sensor housing 410 is filled with the potting material, or a whole area inside the travel sensor housing 410 is filled with the potting material.

It should be understood that the potting material is optional, and the sensing element may alternatively be exposed. Alternatively, the sensing element may be protected in another manner. For example, a cover plate is disposed at the sensing element, to protect the sensing element. Optionally, the sensing substrate 450 is perpendicular to the control substrate 310.

In other words, an electrical connection between the sensing substrate 450 and the control module may be a Z-shaped connection or a straight-line connection. In other words, a central shaft of the sensing substrate 450 is parallel to a central shaft of the sensor housing 410, or a central shaft of the sensing substrate 450 is coaxial with a central shaft of the sensor housing 410. In this way, the central shaft of the sensing substrate is parallel to or coaxial with the primary positioning reference, so that an assembly tolerance can be further reduced, and further, assembly stress on the travel sensor 400 is reduced.

An embodiment of this application further provides an electro-hydraulic brake-by-wire system. The electro-hydraulic brake-by-wire system includes the foregoing hydraulic braking apparatus. The hydraulic braking apparatus is connected to a braking operation member in the electro-hydraulic brake-by-wire system, and is configured to generate braking hydraulic pressure based on an action amount of the braking operation member.

It should be understood that the electro-hydraulic brake-by-wire system may be applied to a vehicle and the braking operation member may be a foot pedal of the vehicle. This is not limited in this application. When applied in a vehicle, the hydraulic braking apparatus is connected to a foot pedal of the vehicle, and is configured to generate braking hydraulic pressure based on an action amount of the foot pedal, to control stable driving of the vehicle.

An embodiment of this application further provides a vehicle, including the foregoing hydraulic braking apparatus or the foregoing electro-hydraulic brake-by-wire system. It should be understood that the vehicle may be an electric vehicle, for example, a pure electric vehicle, an extended range electric vehicle, a hybrid electric vehicle, a fuel cell vehicle, or a new energy vehicle. This is not specifically limited in this application.

It should be understood that the term "and/or" in this specification merely describes an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part that contributes to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hydraulic braking apparatus, comprising:
a hydraulic valve block (100), wherein a through hole is provided in the hydraulic valve block (100);
a master cylinder housing (200), disposed on one side of the hydraulic valve block (100), wherein a master cylinder part (210) is disposed inside the master cylinder housing (200), the master cylinder part (210) comprises a piston (211), a push rod (212), and a magnet component (213), the piston (211) is connected to the push rod (212), and the magnet component (213) moves with the piston (211);
a control module (300), disposed on another side of the hydraulic valve block (100), wherein the control module (300) comprises a control substrate (310) and a connector (320) electrically connected to the control substrate (310); and
a travel sensor (400), fastened to the inside of the hydraulic valve block (100), and configured to detect movement of the magnet component (213) to determine a movement amount of the piston (211), wherein the travel sensor (400) is connected to the connector (320) through the through hole in the hydraulic valve block (100).

2. The apparatus according to claim 1, wherein the travel sensor (400) comprises: a travel sensor housing (410), and a fastening component (420), a first positioning component (431), and a second positioning component (432) that are disposed on the travel sensor housing (410); and the fastening component (420), the first positioning component (431), and the second positioning component (432) are configured to fasten the travel sensor housing (410) to the inside of the hydraulic valve block (100).

3. The apparatus according to claim 2, wherein the first positioning component (431) comprises:
a first sealing ring (431), wherein the first sealing ring (431) is located between the travel sensor housing (410) and the through hole in the hydraulic valve block (100).

4. The apparatus according to claim 2 or 3, wherein the travel sensor (400) further comprises a connection terminal (460) disposed on the travel sensor housing (410), and the connection terminal (460) is connected to the connector (320); and
a distance between the first positioning component (431) and the connection terminal (460) is less than or equal to a first target threshold.

5. The apparatus according to any one of claims 2 to 4, wherein the second positioning component (432) comprises a positioning pin (432).

6. The apparatus according to any one of claims 2 to 5, wherein the travel sensor (400) further comprises a sensing element (440) disposed inside the travel sensor housing (410), and the sensing element (440) is mounted inside the master cylinder housing (200).

7. The apparatus according to claim 6, wherein the travel sensor (400) further comprises a sensing substrate (450) disposed inside the travel sensor housing (410), the sensing element (440) is fastened to the sensing substrate (450), the sensing substrate (450) is electrically connected to the sensing element (440), and the sensing substrate (450) is electrically connected to the connection terminal (460).

8. The apparatus according to claim 7, wherein the travel sensor housing (410) is filled with a potting material, and the sensing substrate (450) and the sensing element (440) are covered with the potting material.

9. The apparatus according to claim 7 or 8, wherein the sensing substrate (450) is perpendicular to the control substrate (310).

10. The apparatus according to any one of claims 1 to 9, further comprising a second sealing ring (500) disposed between the hydraulic valve block (100) and the master cylinder housing (200).

11. A travel sensor, applied to a hydraulic braking apparatus, wherein the hydraulic braking apparatus comprises: a hydraulic valve block (100), wherein a through hole is provided in the hydraulic valve block (100); a master cylinder housing (200), disposed on one side of the hydraulic valve block (100), wherein a master cylinder part (210) is disposed inside the master cylinder housing (200), the master cylinder part (210) comprises a piston (211), a push rod (212), and a magnet component (213), the piston (211) is connected to the push rod (212), and the magnet component (213) moves with the piston (211); a control module (300), disposed on another side of the hydraulic valve block (100); and a travel sensor (400), wherein the travel sensor (400) is connected to the control module (300) through the through hole in the hydraulic valve block (100); and
the travel sensor (400) comprises:
a travel sensor housing (410); and
a fastening component (420), a first positioning component (431), and a second positioning component (432) that are disposed on the travel sensor housing (410), wherein
the fastening component (420), the first positioning component (431), and the second positioning component (432) are configured to fasten the travel sensor housing (410) to the inside of the hydraulic valve block (100) in the hydraulic braking apparatus.

12. The travel sensor according to claim 11, wherein the first positioning component (431) comprises:
a first sealing ring (431), wherein the first sealing ring (431) is located between the travel sensor housing (410) and the through hole in the hydraulic valve block (100).

13. The travel sensor according to claim 11 or 12, wherein the travel sensor further comprises a connection terminal (460) disposed on the travel sensor housing (410), and the connection terminal (460) is connected to the control module (300) in the hydraulic braking apparatus; and
a distance between the first positioning component (431) and the connection terminal (460) is less than or equal to a first target threshold.

14. The travel sensor according to any one of claims 11 to 13, wherein the second positioning component (432) comprises a positioning pin (432).

15. The travel sensor according to any one of claims 11 to 14, further comprising a sensing element (440) disposed inside the travel sensor housing (410), wherein the sensing element (440) is mounted inside the master cylinder housing (200) in the hydraulic braking apparatus.

16. The travel sensor according to claim 15, further comprising a sensing substrate (450) disposed inside the travel sensor housing (410), wherein the sensing element (440) is fastened to the sensing substrate (450), the sensing substrate (450) is electrically connected to the sensing element (440), and the sensing substrate (450) is electrically connected to the connection terminal (460).

17. The travel sensor according to claim 16, wherein the travel sensor housing (410) is filled with a potting material, and the sensing substrate (450) and the sensing element (440) are covered with the potting material.

18. The travel sensor according to claim 16 or 17, wherein the sensing substrate (450) is perpendicular to a control substrate (310) in the control module (300).

19. An electro-hydraulic brake-by-wire system, comprising the hydraulic braking apparatus according to any one of claims 1 to 10.

20. A vehicle, comprising the hydraulic braking apparatus according to any one of claims 1 to 10.
